# EUROPEAN PATENT APPLICATION

(11) **EP 0 550 142 A1**
(43) Date of publication of application: **07.07.1993**
(21) Application number: 92310545.6
(22) Date of filing: 19.11.1992
(51) Int. Cl.: A01N 43/40, A01N 47/30, A01N 25/04, A01N 25/30

(54) **Biocide composition and use**

(30) Priority: 30.12.1991 GB 9127472
(71) Applicant: ZENECA LIMITED, London W1Y 6LN (GB)
(72) Inventor: Payne, John David, Lumb, Rossendale EB4 9QA (GB)
(74) Representative: Pugsley, Roger Graham

(57) **Abstract**

A stable liquid dispersion in an non-polar organic solvent containing an alkylsulphonylhalopyridine and a dispersing agent which is the reaction product of a hydroxyalkylcarboxylic acid and an amine or salt thereof. The alkylsulphonylhalopyridine may be 2,3,5,6-tetrachloro-4-(methylsulphenyl)pyridine and the hydroxycarboxylic acid may be poly(12-hydroxystearic acid) and the amine may be either dimethylamino propylamine or polyethyleneimine. The solvent may be white spirit or an ester or vegetable oil which is a plasticiser for PVC.

## Description

This invention relates to a new anti-microbial composition containing an halo pyridine dispersed in a non-polar organic solvent.

In order to protect polymeric substrates such as plastics materials and paint films from attack by micro-organisms it is normal to add an antimicrobial compound to a precursor or component of the polymer substrate. It is also known to add an antimicrobial compound to a plasticiser for a polymer substrate in order to inhibit microbial degradation of the plasticiser. Compounds which have been found particularly useful in inhibiting fungal and algal growth on the surfaces of such polymeric substrates or in plasticisers for polymeric substrates are the 4-alkylsulphonylhalogenated pyridines. Compounds of this type will be referred to as ASHP hereafter. Compounds of this type, and the preparation of such compounds are described in GB 1103606, US 3,296,272 and US 3,371,011.

ASHP are solids and, in order to incorporate them homogeneously in a polymeric substrate, it is desirable to dissolve or disperse them in a liquid and thereafter to mix the liquid formulation with a precursor or component of the polymer substrate such as a paint or plasticiser or a monomer from which the polymer subtrate is formed. Clearly, it is advantageous to formulate the ASHP directly in a non-polar solvent which is commonly an integral part of the polymer substrate to be protected. Examples of such non-polar solvents are white spirit which is one of the more important solvents used in solvent-based paints and di-octylphthalate, epoxidised soyabean oil, and epoxidised octylstearate which are commonly used as a plasticiser/modifier in polymeric plastics materials such as PVC. However, ASHP's have low solubility in such solvents and it is difficult to incorporate a sufficiently high concentration of the ASHP's into the polymer substrate without increasing the amount of solvent to an undesirably high level with a resultant deterioration in the properties of the polymeric substrate. In the case of a paint film, the film forming characteristics may be adversely affected by a high level of solvent, resulting in a reduction in gloss or adhesion and an increase in drying time.

It has been proposed in US 4,933,011 to prepare liquid formulations of the ASHP by dissolving them in organo phosphorus solvents. However, US 4,933,011 acknowledges that some of these formulations are highly coloured and such high colouration is unattractive in an industrial biocide particularly when it is to be incorporated into a paint or plastics material. Furthermore, certain of these formulations are somewhat unstable and in some instances they give rise to hazy solutions and to crystallisation. This instability of solutions is generally exacerbated by storage under low temperatures and creates problems in the uniform dispensing of the biocide which can result in inadequate protection of the polymeric substrate against microbial degradation. A further problem with the solutions described in US 4,933,011 is the environmental problems associated with such solvents.

Furthermore, many organic liquids which can be used as solvents or co-solvents for formulating the ASHP are highly flammable or toxic and require special handling requirements by both the formulator and the end-user.

It has also been proposed in Research Disclosure 27926 to dissolve ASHP's, such as 2,3,5,6-tetrachloro-4-(methylsulphonyl)pyridine, in polar solvents such as dimethylformamide, methylethylketone, acetone and N-methylpyrrolidone and to add the resulting solution to non-polar solvents, such as white spirit and dioctylphthalate. This approach introduces an additional solvent to the polymeric substrate to be protected which can adversely affect the polymer. Furthermore, stable liquid solutions of this type, containing in excess of 15% of the biocide, are difficult to achieve.

In the case of the ASHP, it is necessary to use an inert organic liquid to avoid adverse effects on microbiological properties under extended storage and more especially at elevated temperatures which may also be encountered during the normal processing of plastics materials.

We have now found that stable dispersions of the ASHP can be prepared in non-polar inert organic liquids by using certain dispersing agents derived from hydroxy-aliphatic carboxylic acids.

Thus, according to the invention there is provided a stable liquid dispersion in a non-polar inert organic liquid comprising
a) an alkylsulphonylhalopyridine of the formula I

   ArSOₓR I

   wherein
   - Ar: is a halogenated pyridyl radical;
   - R: is C₁₋₆ alkyl;
   - x: is 1 or 2; and
b) a dispersing agent which is the reaction product of a hydroxy carboxylic acid and an amine, or a salt thereof.

Especially preferred are the dispersing agents of the formula II

Y.CO.ZR¹ II

wherein
- Z: is a divalent bridging group which is attached to the carbonyl group through an oxygen or nitrogen atom;
- R¹: is a primary, secondary or tertiary amino group or a salt thereof with an acid, or a quaternary ammonium salt group; and
- Y: is the residue of a polyester chain which together with the -CO- group is derived from a hydroxycarboxylic acid of the formula III

HO-X-COOH III

wherein X is a divalent saturated or unsaturated aliphatic group containing at least 8 carbon atoms and in which there are at least 4 carbon atoms between the hydroxy and carboxylic acid groups, or from a mixture of such a hydroxycarboxylic acid and a carboxylic acid which is free from hydroxy groups.

The group X is preferably an alkylene or alkenylene group and preferably contains not greater than 30 carbon atoms, and especially not greater than 20 carbon atoms. Examples of suitable hydroxycarboxylic acids of formula III are 12-hydroxystearic acid, ricinoleic acid, 12-hydroxydecanoic acid and 6-hydroxycaproic acid.

The divalent bridging group represented by Z is preferably of the formula

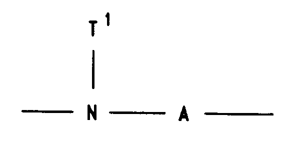

or ― O ― A ―

wherein T¹ is a hydrogen atom, a C₁₋₂₂-alkyl group or ethylene and A is an alkylene, cycloalkylene, heterocycloalkylene or a hydroxyalkylene group containing from 2 to 6 carbon atoms. When T¹ is alkyl, it is preferably C₁₋₆ alkyl and when A is heterocycloalkylene it is preferably piperazine. Where T¹ and A are both ethylene, the groups T¹ and A together with the nitrogen atom to which they are attached and the nitrogen atom of the amino group R¹ may form a piperazine ring.

As examples of the radicals represented by T¹ there may be mentioned methyl, ethyl, n-propyl, n-butyl and octadecyl. As examples of the radicals represented by A there may be mentioned ethylene, trimethylene, tetramethylene, hexamethylene and beta-hydroxytrimethylene.

The primary, secondary and tertiary amino groups represented by R¹ are preferably of the formula 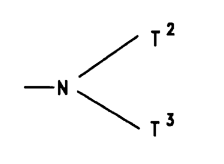
wherein T² and T³ are each independently hydrogen, C₁₋₂₂ alkyl, substituted C₁₋₂₂-alkyl, alkaryl, cycloalkyl, or T² and T³ may together with the nitrogen atom to which they are attached form a 5- or 6-membered ring. When T² or T³ is alkyl, it is preferably C₁₋₆-alkyl, such as methyl. When T² or T³ is cycloalkyl, it is preferably cyclohexyl and when T² and T³ form a ring it is preferably a piperidino, morpholino, or especially a piperazino ring. When T² or T³ is alkaryl it is preferably benzyl.

The quaternary ammonium groups represented by R¹ are preferably of the formula:- 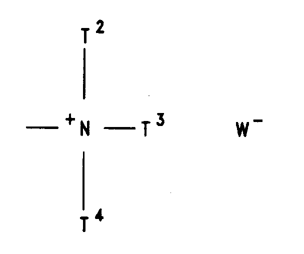
wherein T⁴ is hydrogen, C₁₋₂₂-alkyl, substituted C₁₋₂₂-alkyl, alkaryl or cycloalkyl, and W⁻ is an anion. It is preferred that T⁴ is C₁₋₆-alkyl, such as methyl.

In the special case where T² and T³ together with the nitrogen atom to which they are attached forms a piperazino ring, either or both nitrogen atoms may be alkylated and either ring nitrogen may form a salt or quaternary ammonium compound.

As examples of the radicals represented by T², T³ and T⁴ there may be mentioned alkyl such as methyl, ethyl, n-propyl n-butyl and octadecyl, hydroxy lower alkyl such as β-hydroxyethyl, and cyclohexyl.

The acids used to form salts with the amino groups or which contain the anion W⁻ can be any inorganic acid or an organic acid, such as hydrochloric acid, sulphuric acid, benzene sulphonic acid methane sulphonic acid or benzoic acid. It is especially preferred that the anion W⁻ is that arising from the formation of the quaternary amononium group, for example chloride, bromide or methosulphate.

The preparation of these dispersing agents is described in our earlier granted patent, GB 1373660.

Alternatively, the dispersing agent which is component (b) is the reaction product of a poly(lower alkylene)imine with a polyester having a free carboxylic acid group. The preferred polyester is derived from a hydroxycarboxylic acid of the formula III

HO - X - COOH III

as hereinbefore defined.

The polyester is preferably reacted with the poly (lower alkylene) imine in a weight ratio between 1:1 and 50:1, and more preferably between 2:1 and 20:1.

The term lower alkylene refers to an alkylene group containing from 2 to 4 carbon atoms and the preferred poly(lower alkylene)imine is polyethylene imine which is available either in a substantially linear form or in a branched form. Preferably the polyethylene imine is branched and especially highly branched in which at least 20% of the nitrogen atoms are present in tertiary amino groups. The molecular weight of suitable poly(lower alkylene)imines is generally greater than 500, preferably greater than 5000, and more especially in the range from 10,000 to 100,000.

The reaction product of the hydroxycarboxylic acid and the poly(lower alkylene)imine is a salt or an amide depending on the severity of the reaction conditions employed. The salt and/or amide may be partially neutralised with an acid, especially a mineral acid or it may be alkylated, the alkyl group added being optionally substituted, by reaction with an alkyl sulphate such as dimethylsulphate, whereupon a salt is also formed.

The preparation of the reaction product of the hydroxycarboxylic acid and poly(lower alkylene)imine is described in GB 2,001,083.

A particularly useful dispersing agent is the reaction product obtained from approximately 2 moles of poly(12-hydroxystearic acid) with an acid value of 35 mg KOH/gm and 1 mole dimethylaminopropylamine and quaternised with dimethylsulphate is described in Comparative Example C of EP 127,325. This dispersing agent is hereinafter referred to as "Dispersant 1."

A further particularly useful dispersing agent is the reaction product obtained from approximately 3.3 weight equivalents of poly(12-hydroxystearic acid) and 1 weight equivalent of polyethyleneimine with an average molecular weight of about 20,000. This was prepared in similar manner to Agent A in GB 2,001,083 and is hereinafter referred to as "Dispersant 2".

The ASHP may contain up to four halogen atoms in the pyridine ring, wherein the halogen is preferably chlorine or bromine but more especially chlorine. The group R may be linear or branched and includes methyl, ethyl, isopropyl, butyl and hexyl groups. It is preferred that x is 2. Specific examples of the ASHP are 2,3,5,6-tetrachloro-4-(methylsulphonyl)pyridine and 2,3,5-trichloro-4-(isopropylsulphonyl)pyridine.

A preferred non-polar inert organic liquid in which the dispersion is formed may comprise one or more liquid hydrocarbons or halogenated hydrocarbons, such as benzene, toluene, xylene, n-hexane, cyclohexane, aliphatic petroleum fractions, liquid paraffins, chlorobenzene, carbon tetrachloride, perchloroethylene, liquid chlorinated paraffins and especially white spirit. Other suitable non-polar inert organic liquids include esters such as alkyd resins, heat bodied linseed oils used as varnishes and especially the esters derived from mono- and dicarboxylic acids and linear or branched alcohols as well as epoxidised fatty acid esters and epoxidised vegetable oils which are used as plasticisers and/or modifiers in the fabrication of plastics materials. Examples of such plasticisers and/or modifiers include phthalates, particularly the dialkyl phthalates such as dioctylphthalate, di(2-ethylhexyl)phthalate, dinonylphthalate and di-isodecylphthalate; epoxidised octylstearate and epoxidised soyabean oil; and the phosphate esters of the general formula O=P(-OR⁴)₃ wherein R⁴ is hydrocarbyl, especially aryl such as phenyl and more especially C₁₋₄ lower alkyl which may be linear or branched such as isopropyl. Examples of other esters are adipates, sebacates, azolates and trimellitates of linear or branched alcohols, especially those alcohols containing from 8 to 10 carbon atoms, and low molecular weight oligo- and poly- esters such as those obtained from 1,3-butanediol and adipic acid.

Generally, the non-polar inert organic liquid or mixture thereof in the dispersion is formed will depend upon the use to which the composition is put, and is preferably selected to be the same as that used in the polymeric composition which is to be protected from microbiological spoilage by the ASHP.

For certain applications it is common to employ more than one class of antimicrobial compound in order to increase the protection of the polymeric substrate. This is particularly true in the case of paint films where other fungicides and algicides may be incorporated to protect the paint film against microbial degradation. Examples of such an additional antimicrobial compounds are substituted ureas.

Thus, as a further embodiment of the present invention, there is provided a dispersion as hereinbefore defined which contains at least one substituted urea, especially a urea containing at least one substituent group on each of the nitrogen atoms.

In one class of urea compounds one nitrogen atom carries a single aromatic substituent and there are substituents on the other nitrogen atom. These substituents are typically alkyl, alkenyl, alkynyl, alkoxy, or cycloalkyl groups. Preferred substituted ureas have the general formula: 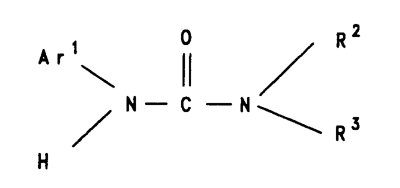
wherein
- Ar¹: is an aryl, substituted aryl, heteroaryl or substituted heteroaryl group;
- R²: is an alkyl, substituted alkyl, alkenyl, substituted alkenyl, alkynyl, substituted alkynyl, cycloalkyl, substituted cycloalkyl, alkoxy or substituted alkoxy group; and
- R³: is a hydrogen atom or a group as defined for R².

The substituted groups may contain one or more substitutents selected from a hydrocarbon group, a halogen atom, a hydrocarbonoxy group, a hydroxy group, and an alkylaminosulphonyl group, or a mixture of such substituents.

The group Ar¹ may be an unsubstituted aryl group such as phenyl but may be substituted preferably with from one to three substituents selected from halogen, alkyl, alkoxy and aryloxy which may itself be substituted. Thus, the group Ar¹ may be, for example, phenyl, 4-chlorophenyl, 3,4-dichlorophenyl, 4-isopropylphenyl, 3-chloro-4-bromophenyl, 3-chloro-4-methylphenyl, 4(4'-chlorophenoxy)phenyl or 4(4'-methoxyphenoxy)phenyl. If the group Ar¹ is heteroaryl, it may be, for example, a benzothiazol-2-yl or a pyridyl group.

The groups R² and R³ are typically unsubstituted. Generally each of R¹ and R² contains not more than six carbon atoms, especially not more than four carbon atoms. If R³ is other than a hydrogen atom, the groups R² and R³ can be the same or different. Typically R³ is a hydrogen atom or a methyl group. The group R² may be, for example, methyl, n-butyl, methoxy, 2-methylcyclohexyl or 3-butynyl.

The group Ar¹ is preferably unsubstituted or, more preferably, is substituted with one or two substituents selected from halogen and C₁₋₆-alkyl especially C₁₋₄-alkyl. Where Ar¹ is one of these preferred groups, it is further preferred that R² and R³ are selected from hydrogen, methyl and methoxy and that at least one of R² and R³ is other than hydrogen. It is especially preferred that R² and R³ are both methyl.

Preferred ureas for use in the present dispersion include
3-(3,4-dichlorophenyl)-1,1-dimethylurea,
3-(3-chloro-4-bromophenyl)-1-methyl-1-methoxyurea,
3-(4-isopropylphenyl)-1,1-dimethylurea,
3-(3,4-dichlorophenyl)-1-methyl-1-methoxyurea,
3-(3-chloro-4-methylphenyl)-1,1-dimethylurea, 1,1-dimethyl-3-phenylurea,
3-(4-chlorophenyl)-1,1-dimethylurea, and
3-(3-chloro-4-methoxyphenyl)-1,1-dimethylurea;
and other substituted ureas include
1,1-dimethyl-3-(3-trifluoromethylphenyl)urea,
3-(3-tertiarybutylcarbamoyloxyphenyl)-1,1-dimethylurea,
1,1-dimethyl-3-(4-trifluoromethylphenyl)urea,
3-[3-chloro-4-(chlorodifluoromethylthio)phenyl]-1,1-dimethylurea,
3-(3-[1',1',2',2'-tetrafluoroethoxy]phenyl)-1,1-dimethylurea,
3-(3-chloro-4-trifluoromethoxyphenyl)-1,1-dimethylurea,
3-[4-(4'-chlorophenoxy)phenyl]-1,1-dimethylurea,
3-[4-(4'-chlorophenyl)-1-methyl-1-(3-butynyl)urea,
3-(4-chlorphenyl)-1,1-diallylurea,
3-(3,4-dichlorophenyl)-1-methyl-1-n-butylurea,
3-phenyl-1-(2-methylcyclohexyl)urea,
and 3-(benzothiazol-2-yl)-1-methylurea.

Dispersions having especially useful properties have been obtained using 3-(3,4-dichlorophenyl)-1,1-dimethylurea.

Substituted ureas for use in the present dispersions can be prepared by known procedures, for example as described in GB 691,403; 692,589; US 2,655,455 and US 2,768,971.

The present dispersions may also contain silicates as structure enhancers. Examples of suitable silicates are synthetic clays, such as laponite, or naturally occurring clays, such as bentonite, hectonite and montmorillonite. Clays of this type are often chemically treated to render them compatible with the liquid medium in which they are to be incorporated. For example, bentonite clays for use in non-polar organic liquids are often treated with fatty amines or fatty quaternary ammonium compounds and are commercially available under the name Bentone (Rheox Inc., New Jersey). In addition, the dispersions may also contain a small amount of a polar solvent as a clay activator. Polar solvents help to "wet" the clay and effect delamination thus facilitating the dispersion of the clay in the non-polar inert organic liquid. Examples of suitable clay activators are water, lower alkanols, such as methanol and ethanol, lower alkyl ketones such as acetone and methylethylketone and especially lower alkylene carbonates such as propylene carbonate.

The amount of the various components in the present dispersions can vary within fairly wide limits depending upon the actual use to which they are put. Thus, the amount of the ASHP may conveniently vary from 5% to 80% by weight of the total dispersion, but is preferably from 10% to 70% and especially from 30% to 50%, and more especially from 40% to 50%. The amount of dispersing agent may conveniently vary from 0.1% to 20% by weight of the total dispersion, but it is preferably from 1% to 10% and especially from 3% to 10%, and more especially from 3% to 7%. The organo-clay may be totally absent from the composition, but is preferably present in an amount from 0% to 5% by weight of the total dispersion, and especially from 0% to 2% and more especially from 0.5% to 1%. The clay activator similarly may be absent from the dispersion, but is preferably present from 0% to 1% by weight of the dispersion, preferably from 0% to 0.6% and especially from 0.15% up to 0.3%. When water is present in the dispersion, it is preferably present in small amount, for example from 0% to 0.1% by weight of the dispersion, preferably from 0% to 0.05% and more especially from 0.01% to 0.02%.

The dispersion may contain up to 30% by weight of the substituted urea with respect to the total dispersion, preferably from 0% up to 20%, more preferably from 3% to 10%, and especially from 4% to 7%.

Particularly useful effects in the protection of solvent-based paint films against fungicidal and algicidal attack have been obtained with a dispersion having the following composition wherein the components are expressed as percentage by weight of the total dispersion and the remainder is white spirit.
45% 2,3,5,6-tetrachloro-4(methylsulphonyl)pyridine,
5% 3-(3,4-dichlorophenyl)-1,1-dimethyl urea,
5% Dispersant 1,
1% Bentone 38,
0.3% propylene carbonate, and
0.015% water
Similarly, especially useful effects as a plasticiser/modifier for PVC plastics materials have been obtained with a dispersion having the following composition wherein the remainder is di-octyl phthalate.
50% 2,3,5,6-tetrachloro-4-(methylsulphonyl)pyridine,
5% Dispersant 1,
1.5% Bentone 38,
0.45% propylene carbonate, and
0.02% water
Further useful effects as a plasticiser/modifier for PVC plastics materials have been obtained with the two following dispersions, the one in epoxidised soyabean oil and the other in epoxidised octylstearate.
5% 2,3,5,6-tetrachloro-4-(methylsulphonyl)pyridine,
0.5% Dispersant 2,
1.5% Bentone 38,
0.45% propylene carboante, and
0.02% water
to 100% with epoxidised soyabean oil.
25% 2,3,5,6-tetrachloro-4-(methylsulphonyl)pyridine,
2.5% Dispersant 1,
1.0% Bentone 38,
0.3% propylene carbonate, and
0.015% water
to 100% with epoxidised octylstearate.

The dispersions can be obtained by any of the conventional and well known methods of preparing dispersions. Thus, the solid i.e. the ASHP or mixture thereof with a substituted urea, the non-polar organic liquid and the dispersing agent may be mixed in any order and the mixture then subjected to a mechanical treatment to reduce the particle size of the solid, for example by ball milling, bead milling or gravel milling until the dispersion is formed. The treatment is continued until the particle size of the solid is less than 25 microns and preferably less than 15 microns, for example between 5 and 10 microns.

When the dispersing agent is used in the form of a salt, then it is not essential to use the reformed salt, since this can be prepared in situ at the same time as making the dispersion by mixing together the solid, the non-polar organic liquid, the appropriate dispersing agent containing a primary, secondary or tertiary amino group, and an acid of the formula H⁺W⁻ as hereinbefore defined, and subjecting the mixture to a mechanical treatment. It is not essential that all the amino groups are converted into salt form, since it has been found that a mixture of the free base form and the salt form is also an effective dispersing agents.

Alternatively, the solid can be treated to reduce its particle size independently or in admixture with either the organic liquid or the dispersing agent, and the other ingredient or ingredients then added following which dispersion can be obtained by stirring the mixture. As a further alternative an organic liquid solution of the dispersing agent can be emulsified into an aqueous phase by known means, such as high speed stirring, in the presence of one or more surface active agents, and the resulting emulsion added to an aqueous slurry of the solid, after which the organic liquid and the water are removed by filtration and drying of the residue of solid and dispersing agent. This residue can be subsequently dispersed in the non-polar organic liquid. Dispersions obtained in this way and comprising the solid in finely divided form and the dispersing agent are a further feature of the invention.

In some circumstances it may be more convenient to prepare the dispersion of the present invention from an aqueous dispersion of the solid by mixing with the dispersing agent, which itself may be in an aqueous medium adding the non-polar organic liquid and then heating in order to reduce the amount of water to the desired level. The particle size of the solid may subsequently be reduced by conventional milling techniques.

The dispersion is useful for inhibiting microbial spoilage in polymeric substrates. More specifically, the present dispersion is especially effective in providing anti-fungal activity and anti-algal activity. Thus, the dispersion can be used for the treatment of polymeric substrates to inhibit the growth of micro-organisms, particularly fungi and algae.

As a further aspect of the present invention there is provided a method for inhibiting the growth of micro-organisms on, or in, a polymeric substrate which comprises treating the substrate or a precusor or component thereof with a dispersion of an ASHP and a substitued urea, when present, in a non-polar organic liquid in the presence of a dispersant as hereinbefore defined.

The dispersion is especially useful in conditions in which micro-organisms, especially fungi and algae, grow and cause problems. Systems in which micro-organisms cause problems include non-aqueous systems and the composition is especially useful for inhibiting microbiological degradation of surface coating compositions such as paints, varnishes and lacquers and also solid materials such as wood and leather and synthetic polymers, particularly those containing appreciable proportions of additives. The dispersion can be included in such materials and is particularly useful when incorporated into a solvent-based paint, varnish or lacquer to which it provides anti-fungal and anti-algal characteristics. The dispersion is also useful when incorporated into a synthetic polymer such as polyvinyl chloride or a polyurethane which contains a plasticiser such as an ester, for example a diester of phthalic acid or adipic acid, or an epoxidised oil, such as epoxidised soya bean oil.

As a further aspect of the present invention there is provided a surface coating composition which contains an amount of the present dispersion which is effective in inhibiting the growth of fungi and algae in the formed surface coating.

The surface coating composition may be a paint, varnish or lacquer and is especially a paint, for example a solvent-based paint. The surface coating composition preferably contains sufficient of the dispersion to provide a level of total active ingredients, that is the ASHP and the urea, when present, from 0.001% to 50%, especially 0.1% up to 2%, by weight relative to the total weight of the surface coating composition.

The dispersion provides anti-fungal and anti-algal properties to the surface coating composition. In contrast to the iodo compounds, such as iodopropynyl-N-butylcarbamate, which are commonly used to provide anti-fungal properties, especially in paints, the present dispersions show little discoloration of a paint film when exposed to sunlight and they can thus, be used with paint systems in which many iodo compounds would give unacceptable discoloration of the resultant paint film.

As a further aspect of the present invention there is provided a plasticised polymer which contains an effective amount of a dispersion in accordance with the present invention.

A preferred polymer is typically plasticised PVC which contains from 10% to 50% by weight of plasticiser relative to the polymer. The present dispersion is preferably incorporated into the plasticiser in an amount to give from 0.01% up to 5% of the ASHP relative to the plasticiser.

The present invention in all its aspects is further illustrated and described in the following examples in which all parts are by weight unless otherwise stated to the contrary.

The dispersions obtained were evaluated for microbiological activity against fungi and algae after incorporation into paint films or plasticised polymers, by the following methods:
The products were tested for activity against fungi which were one or more of Alternaria alternata, Aureobasidum pullulans, Cladosporium herbarum, Phoma violacea and Stemphylium dendriticum.

### Evaluation as a paint film fungicide

The biocide dispersions to be tested were obtained as described in Examples 1 and 2. The dispersions were added to samples of an exterior solvent based paint in glass bottles and mixed to give final active ingredient levels in the paint of 1.0, 0.5 and 0.25% w/v.

The bottles containing paint plus biocide dispersion were sealed and stored at 40^{o}C for three days.

Small wooden test pieces were prepared for each paint composition by priming and then brushing on two full even coats.

One set of the coated test pieces was stored at ambient temperature in the dark. A further set of coated test pieces was placed in a leaching device in which the test pieces were sprayed with water for one day and the test pieces were removed from the leaching device and dried. Yet a further set of coated test pieces was subjected to leaching for two days.

The coated test pieces were then transferred to a high humidity chamber. Each test piece was then spray inoculated with a mixed fungal spore suspension of Alternaria alternata, Aureobasidium pullulans, Cladosporium herbarum, Phoma violacea, and Stemphylium dendriticum.

Incubation was carried out at 25^{o}C for four weeks. After this period the paint films were examined for fungal growth by naked eye and by stereo optical microscope.

### Evaluation as a fungicide/algicide in a plasticiser

The biocide dispersions were obtained as described in Examples 2 to 4. The dispersions were added to samples of commercially available plasticisers for PVC, thoroughly mixed, and used to fabricate sheets of PVC by high temperature milling at 165 to 170^{o}C.

A duplicate set of sheets (3.5 x 7 cms) were placed on the surface of a sterilised moistened vermiculate bed (250 gms) in polypropylene boxes placed in a humidity chamber, and another duplicate set of sheets were weathered for 100 hours in a Xenon arc weatherometer prior to placing in the humidity chamber.

The test sheets of PVC were then sprayed with approximately 0.5 parts by volume of a mixed fungal spore suspension and streptomycete cell suspension containing Aureobasidium pullulans (CMI 145194), Fusarium solani (CMI 172506), Penicillium funiculosum (CMI 114933), Scopulariopsis brevicaulis (CMI 49528) and Streptoverticillium waksmanii (NCIB 10991). The test samples were scaled in the polypropylene boxes and incubated for 28 days at 21^{o}C.

After incubation the samples were examined for growth by the naked eye and by stereo optical microscopy.

### Example 1

Dispersant 1 (50 parts) was dissolved in white spirits (350 parts; Exxsol D-40) by stirring at 20-25^{o}C. 2,3,5,6-tetrachloro-4-(methylsulphonyl)pyridine (450 parts) and 3-(3,4-dichlorophenyl)-1,1-dimethylurea (50 parts) were added and mixing continued under high shear for 30 minutes in a Silverson mixer to thoroughly disperse the solids. The coarse dispersion obtained was then milled in a horizontal bead mill, using No 6 glass Ballotini beads as grinding medium and a peripheral disc speed of about 1500 ft/min. After three passes through the mill, the particle size of the solids was below 7 microns.

Organo-clay (10 parts; as Bentone 38) was separately mixed with white spirit (77 parts; as Exxsol D-40) for 30 minutes under high shear in a Silverson mixer in order to wet-out and deagglomerate the organo-clay.

The organo-clay slurry was then added to the dispersion of the biocides under high shear mixing, and propylene carbonate (3 parts) and water (0.15 parts) were added simultaneously, and high shear mixing continued for a further 30 minutes. High shear mixing was contriued for a further 30 minutes to give a final dispersion which is highly shear thinning with a viscosity of about 15 Pa.s at 1 sec⁻¹ shear rate.

The composition obtained contains 45% (w/v) of the chlorinated pyridine, 5% (w/w) substituted urea, 5% (w/w) Dispersant 1, 1% (w/w) organo-clay, 0.3% (w/w) propylene glycol and 0.015% (w/w) water in white spirit as a pale cream dispersion.

After storage for 4 weeks at 40^{o}C, the disperson exhibited about 5% surface separation with no dense or hard sediment. Similarly, when stored at 20^{o}C the dispersion exhibited less than 1% surface separation, and again showed no dense sediment. Temperature cycling from -10^{o}C to 40^{o}C at 24 hour intervals over 4 weeks resulted in approximately 2% surface separation with again very little sedimentation. In all cases where sedimentation had occurred, the dispersion was fully reconstituted by gentle agitation.

When added to conventional solvent-based paints at the 2% (w/w) level of the dispersion, no yellowing of the paint film occurred after 2 months exposure. The dispersion had no effect on the thixotropy of the paint, or the gloss of the dried film or the drying time.

### Example 2

A similar dispersion to that described in Example 1 above was obtained by using the procedure as described in Example 1 but using slightly different quantities of the components and using dioctylphthalate as the non-polar organic solvent. The urea was omitted from this formulation.

An off-white stable dispersion in dioctylphthalate was obtained which contained 50% (w/w) 2,3,5,6-tetrachloro-4(methylsulphonyl)pyridine, 5% (w/w) Dispersant 1, 1.5% (w/w) organo-clay, 0.45% (w/w) propylene carbonate and 0.02% (w/w) water.

### Example 3

The procedure of Example 2 was repeated using slightly different amounts of the components, again giving an off-white stable dispersion in dioatylphthalate which contained 30% (w/w) 2,3,5,6-tetrachloro-4-(methlsulphonyl) pyridine, 3% (w/w) Dispersant 1, 1.5% (w/w) organo-clay, 0.45% (w/w) propylene carbonate and 0.02% water.

### Example 4

The procedure of Example 2 was repeated except that the dioctylphthalate was replaced by the same amount of a 50/50 mixture of 2-ethylhexyl phthalate and 2-ethylhexyladipate. Again a stable dispersion was obtained.

### Example 5

The dispersion obtained in Example 4 above was evaluated as a plasticiser for PVC using the procedure outlined in the section Evaluation as a fungicide/algicide in a plasticiser. After incubation the following results were obtained as recording in Table 1 below.

**TABLE I**

| **Sample**^{(a)} | | **Growth**^{(b)} | |
|---|---|---|---|
| **Example** | **Conc** (ai) | **Before weathering** | **After weathering** |
| 4 | 100 ppm | 5,5 | 5,5 |
| | 250 ppm | 5,5 | 5,5 |
| | 750 ppm | 2,2 | 5,5 |
| | 2500 ppm | 0,0 | 4,5 |
| | 7500 ppm | 0,0 | 2,3 |
| | 10000 ppm | 0,0 | 1,1 |
| A | 250 ppm | 5,5 | 5,5 |
| | 750 ppm | 1,1 | 5,5 |
| | 2500 ppm | 0,0 | 5,5 |
| | 7500 ppm | 0,0 | 4,5 |
| | 22500 ppm | 0,0 | 0,0 |
| Control | | 5,5 | 5,5 |

| | | | |
|---|---|---|---|
| **Notes to Table 1** (a) Comparative Example A is a finely milled solid sample of 2,3,5,6-tetrachloro-4-(methylsulphonyl)pyridine ai is active ingredient Control means no biocide added | | | |
| (b) Growth. The figures in the two columns are for duplicate tests on the treated samples 0 is no visible growth on test sample 1 is less than 1% surface growth 2 is 1 to 20% surface growth 3 is 20 to 30% surface growth 4 is 30 to 70% surface growth 5 is greater than 70% surface growth | | | |

### Example 6

The procedure described in Example 1 was repeated using slightly different quantities of the components and using epoxidised soyabean oil as the non-polar organic solvent. In this example, Dispersant 1 was replaced with Dispersant 2, and the urea was omitted.

An off-white stable dipsersion in epoxidised soyabean oil was obtained which contained 5% (w/w) 2,3,5,6-tetrachloro-4(methylsulphonyl) pyridine, 0.5% (w/w) Dispersant 2, 1.5% (w/w) organo-clay, 0.45% (w/w) propylene carbonate and 0.02% (w/w) water.

### Example 7

The procedure described in Example 1 was again repeated using slight different quantities of the components, omitting the urea, and using epoxidised octylstearate as the non-polar organic solvent. Again, an off-white stable dispersion was obtained containing 25% (w/w) 2,3,5,6-tetrachloro-4(methylsulphonyl)pyridine, 2.5% (w/w) Dispersant 1, 1.0% (w/w) organo clay, 0.3% (w/w) propylene carbonate and 0.015% (w/w) water.

## Claims

1. A stable liquid dispersion in a non-polar inert organic liquid comprising
(a) an alkylsulphonylhalopyridine of formula I
ArSOₓR I
wherein
Ar is a halogenated pyridyl radical;
R is C₁₋₆ alkyl;
x is 1 or 2; and
(b) a dispersing agent which is the reaction product of a hydroxy carboxylic acid and an amine, or a salt thereof.

2. A dispersion as claimed in claim 1 wherein the dispersing agent is a compound of formula II
Y.CO.ZR¹ II
wherein
Z is a divalent bridging group which is attached to the carbonyl group through an oxygen or nitrogen atom;
R¹ is a primary, secondary or tertiary amino group or a salt thereof with an acid, or a quaternary ammonium salt group; and
Y is the residue of a polyester chain which together with the -CO- group is derived from a hydroxycarboxylic acid of the formula III
HO-X-COOH III
wherein X is a divalent saturated or unsaturated aliphatic radical containing at least 8 carbon atoms and in which there are at least 4 carbon atoms between the hydroxy and carboxylic acid groups, or from a mixture of such a hydroxycarboxylic acid and a carboxylic acid which is free from hydroxy groups.

3. A dispersion as claimed in claim 2 wherein Z is a group of the formula 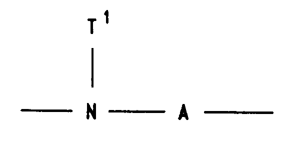
or ― O ― A ―
wherein
T¹ is hydrogen, a C₁₋₂₂ alkyl radical or ethylene; and
A is an alkylene, cycloalkylene heterocycloalkylene or hydroxyalkylene containing from 2 to 6 carbon atoms, or where T¹ and A are both ethylene, the groups T¹ and A together with the nitrogen atom to which they are attached and the nitrogen atom of the amino group R¹, form a piperazino ring.

4. A dispersion as claimed in either claim 2 or claim 3 wherein R¹ is an amine of the formula 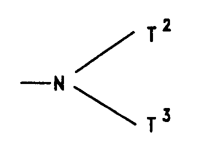 wherein
T² and T³ are independently hydrogen, C₁₋₂₂ alkyl, substituted C₁₋₂₂ alkyl, alkaryl, cycloalkyl or where T² and T³ together with the nitrogen atom to which they are attached form a 5- or 6-membered ring.

5. A dispersion as claimed in any one of claims 2 to 4 wherein R¹ is a quaternary ammonium group of the formula 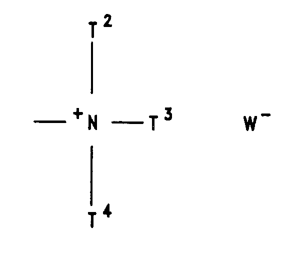 wherein
T² and T³ are as defined in claim 7; and
T⁴ is hydrogen, C₁₋₂₂ alkyl, substituted C₁₋₂₂ alkyl, aralkyl or cycloalkyl and W⁻ is an anion.

6. A dispersion as claimed in claim 1 wherein the dispersion agent is the reaction product obtained from approximately 2 moles poly(12-hydroxystearic acid) and 1 mole dimethylamino propylamine quaternised with dimethylsulphate.

7. A dispersion as claimed in claim 1 wherein the dispersing agent is the reaction product of a poly(lower alkylene) imine and a polyester having a free carboxylic acid group.

8. A dispersion as claimed in any one of claims 1 to 7 wherein the non-polar organic solvent is a hydrocarbon, a halogenated hydrocarbon, an ester, a heat bodied linseed oil, an epoxidised fatty acid ester or an epoxidised vegetable oil.

9. A dispersion as claimed in any one of claims 1 to 8 wherein the alkylsulphonyl halopyridine is
2,3,5,6-tetrachloro-4-(methylsulphonyl)pyridine or
2,3,5-trichloro-4-(isopropylsulphonyl)pyridine.

10. A dispersion as claimed in any one of claims 1 to 9 which additionally contains a substituted urea of the formula 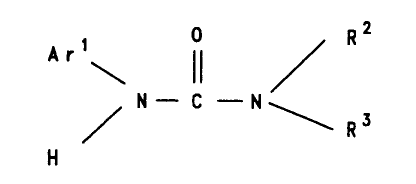 wherein
Ar¹ is an aryl, substituted aryl, heteroaryl or substituted heteroaryl group;
R² is an alkyl, substituted alkyl, alkenyl, substituted alkenyl, alkynyl, substituted alkynyl, cycloalkyl, substituted cycloalkyl, alkoxy or substituted alkoxy group; and
R³ is hydrogen atom or a group as defined for R².

11. A method for inhibiting the growth of micro-organisms on or in a polymeric substrate which comprises treating the substrate with a dispersion as claimed in any one of claims 1 to 10.
